# EUROPEAN PATENT APPLICATION

(11) **EP 1 281 919 A2**
(43) Date of publication of application: **05.02.2003**
(21) Application number: 02425491.4
(22) Date of filing: 29.07.2002
(51) Int. Cl.: F24H 1/52, F24H 1/43, F24H 8/00

(54) **High efficiency spiroidal heat exchanger for heating and/or production of sanitary hot water**

(30) Priority: 03.08.2001 IT RM20010474
(71) Applicant: M.F.s.r.l., 65100 Pescara (IT)
(72) Inventor: Tesolin, Luciano, 65100 Pescara (IT)
(74) Representative: Iannone, Carlo Luigi

(57) **Abstract**

The invention concerns a high efficiency spiroidal heat exchanger for heating and/or production of sanitary hot water, particularly suitable for the condensation, characterised in that it provides a combustion gas path through the spaces between the turns of the pipe defining the combustion chamber.

## Description

The present invention concerns a high efficiency spiroidal heat exchanger for heating and/or production of sanitary hot water.

More specifically, the invention concerns a heat exchanger of the above kind the geometry of which and its high efficiency make the same particularly suitable to obtain the combustion smokes condensation, with the consequent possible recovery of the most part of the condensation latent heat in the same smokes.

It is therefore specific object of the present invention a high efficiency spiroidal heat exchanger for heating and/or production of sanitary hot water, particularly suitable for the condensation, characterised in that it provides a combustion gas path through the spaces between the turns of the pipe defining the combustion chamber.

Preferably, according to the invention, flow conveyors or liners are provided, for the proper operation of the heat exchanger, thus remarkably increasing the specific surface efficiency of the heat exchanger, obliging the hot smokes to lap all the coil of the heat exchanger, included the curved side of the ovoid pipe.

Particularly, it is possible that there are provided different kind of conveyors to obtain high exchange power with quite small surfaces, shielding the outer walls of the heat exchanger from the direct radiation of the flame and contribute, thanks to their heat contribution, and to the turbulence induced into the discharge gas flow, to the reduction of the CO emission from the heat exchanger.

Still according to the invention, said path can take a very flexible architecture providing the passage of the discharge smokes, downward the combustion chamber, from outside to inside the spiral, and vice versa, thus realising systems having one, two, three, etc., smoke paths.

Always according to the invention, it is provided the use of a coil, serially provided with respect to the main coil, and concentrically placed with respect to the same, in order to increase the exchange surface, and thus further increase the efficiency of the system.

Furthermore, according to the invention, it is provided a coil within the main coil allowing having heat exchange with the primary water and standstill water, or heat exchange with the primary water and partially circulating water, or heat exchange with the primary water and fully circulating water.

Still according to the invention, it is provided an aluminium helix provided in the upper part of the heat exchanger.

The present invention will be now described, for illustrative but not limitative purposes, according to its preferred embodiments, with particular reference to the figures of the enclosed drawings, wherein:
figure 1 is a schematic view of an embodiment of a boiler with a heat exchanger according to the invention;
figure 2 is a section view of a pipe profile for the heat exchanger according to the invention;
figure 3 is a section view of a second pipe profile for the heat exchanger according to the invention;
figure 4 is a cut away figure of the boiler of figure 1, with some particulars put into evidence;
figures 4a - 4e show further embodiments of a particular of the boiler of figure 4;
figure 4f shows a particular of the boiler of figure 4;
figure 5 schematically shows a further embodiment of a boiler with a heat exchanger according to the invention;
figure 6 schematically shows a further embodiment of a boiler with a heat exchanger according to the invention;
figure 7 schematically shows a further embodiment of a boiler with a heat exchanger according to the invention;
figure 8 schematically shows a further embodiment of a boiler with a heat exchanger according to the invention;
figure 9 schematically shows a further embodiment of a boiler with a heat exchanger according to the invention;
figure 10 schematically shows a further embodiment of a boiler with a heat exchanger according to the invention; and
figure 11 schematically shows a further embodiment of a boiler with a heat exchanger according to the invention providing the pipe of figure 3.

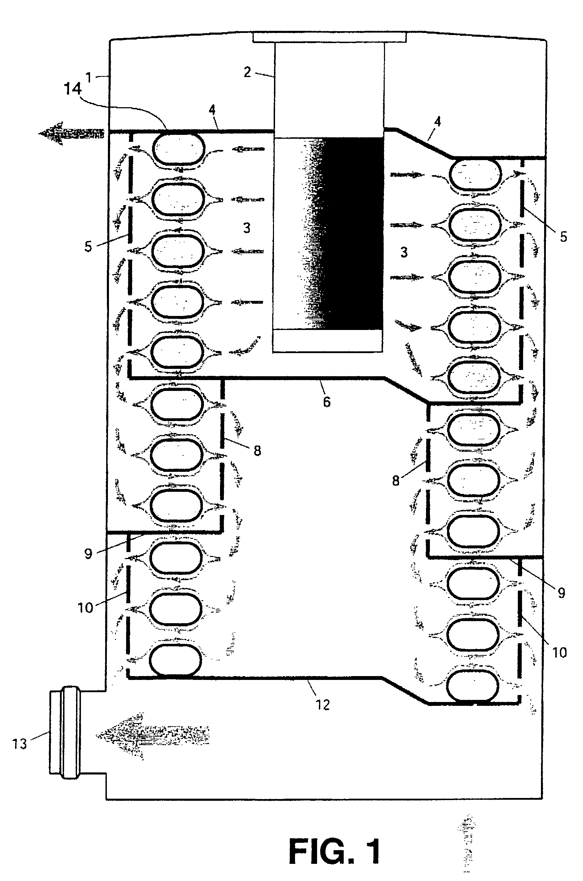

Observing now the figures of the enclosed drawings, and first particularly figure 1, it is shown a heat exchanger for heating and/or production of sanitary water, providing an outer housing 1, a burner 2, a combustion chamber 3, and an upper closure 4 of the combustion chamber 3.

Within the housing 1, it is further provided a flow conveyor 5 for the first smokes path.

At the bottom, it is provided a lower closure of the combustion chamber.

By the reference number 8, it is indicated the inner flow conveyor for the second smokes path, while with the reference number 9 it is indicated a separator element of the second and third smokes path.

Conveyor 11 is the one for the inner flow of the third smokes path, while the separator element of the third smokes path - discharge is indicated by the reference number 12, and the smokes discharge is indicated by the reference number 13.

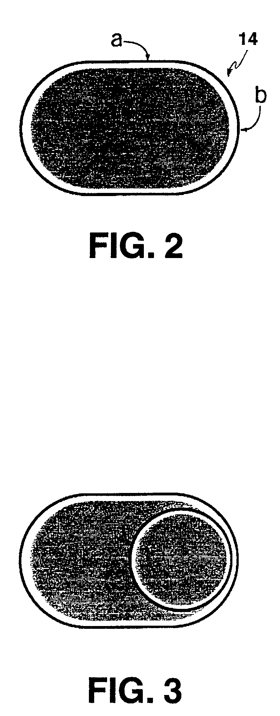

As it can be seen in the figures, the heat exchanger is essentially comprised of a pipe, having the profile shown in figure 2, spiral wound in such a way to realise, within the same spiral, the combustion chamber, to house the burner and to develop the thermo-chemical combustion reactions and separator by a suitable refractory material baffle, and the heat recovery element, suitable to recover the sensible and latent heat of the smokes, before discharging them in the atmosphere.

A spiral pipe, eventually inserted within the biggest pipe (figure 3) acts as sanitary heat exchanger of the bi-thermal type, realising "steady state" a water - water heat exchange, even without water circulation of the water primary circuit ("standstill" primary water).

Geometry of the heat exchanger 14 according to the invention, and its high efficiency, allow realising the combustion smokes condensation, with the consequent recovery of the main part of the smoke condensation latent heat.

Heat exchanger 14 is comprised of a steel pipe, resistant to the corrosion by the acid condensate produced by the combustion, see figure 2, spiral wound in such a way to realise, within the same spiral, the combustion chamber 3, to house the burner 2 and to develop the thermo-chemical combustion reactions and separated by a suitable refractory material baffle, and the heat recovery element, that can be realised with possible different configurations with variable efficiencies.

In the first part of the heat exchanger 14 (combustion chamber 3) the gas/water thermal exchange mainly occurs by radiation.

In fact, being the pipe directly wound about the burner 2, the double effect is obtained of directly "lightening" the pipe containing the system water, flowing upward, countercurrent with respect to the smokes path, first heating the same before the exit from the heat exchanger 14, and to cool the flame outer surface of the burner, by the same system water, in such a way to obtain rather low flame surface temperatures.

Low flame temperature limits the oxidation reaction of the nitrogen contained in the comburent air and possibly in the combustible gas with a reduced formation of the thermal Nox, that are dangerous atmosphere polluting substances, that also causes the "acid rains" phenomenon.

Optimum distance between the outer surface of the burner 2 and the inner surface of the pipe 14 that water system covers, allows limiting the formation of thermal Nox, without inhibiting the oxidation reaction of the carbon monoxide and carbon dioxide.

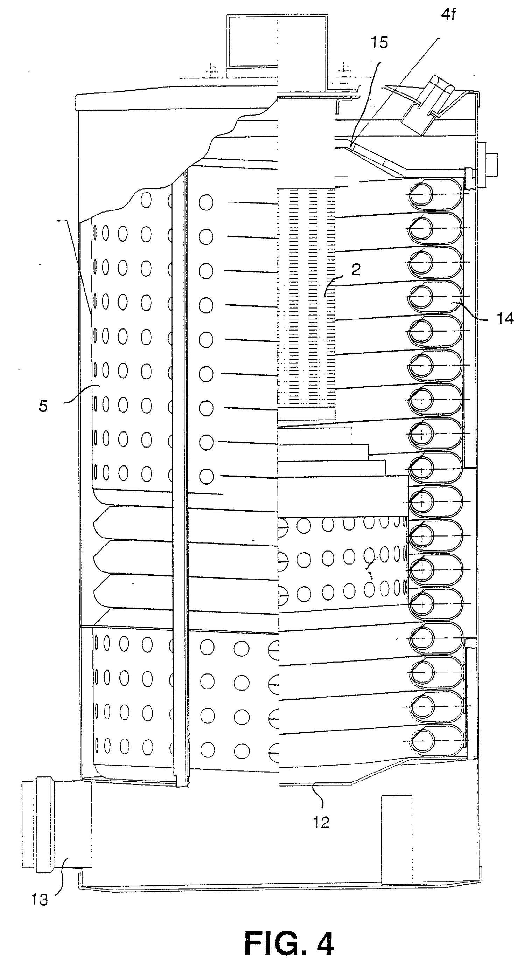

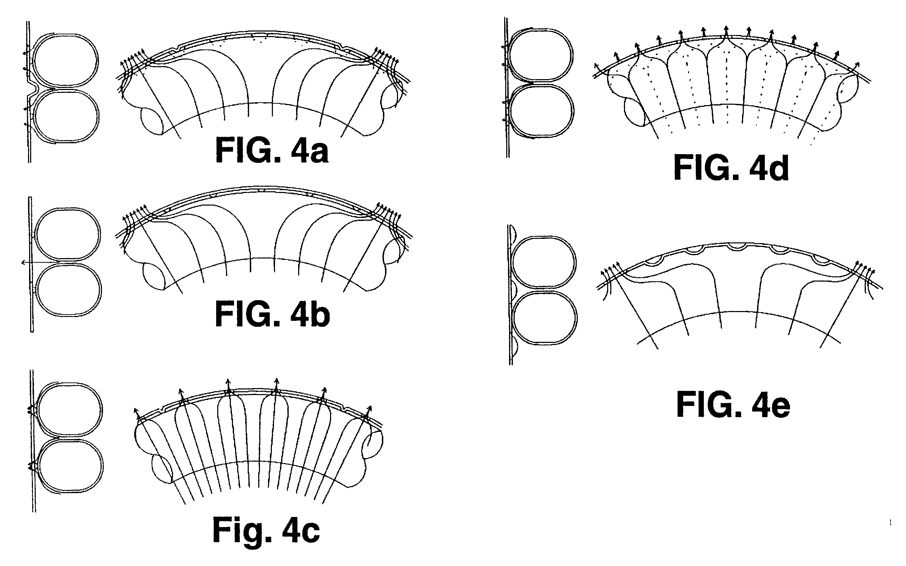

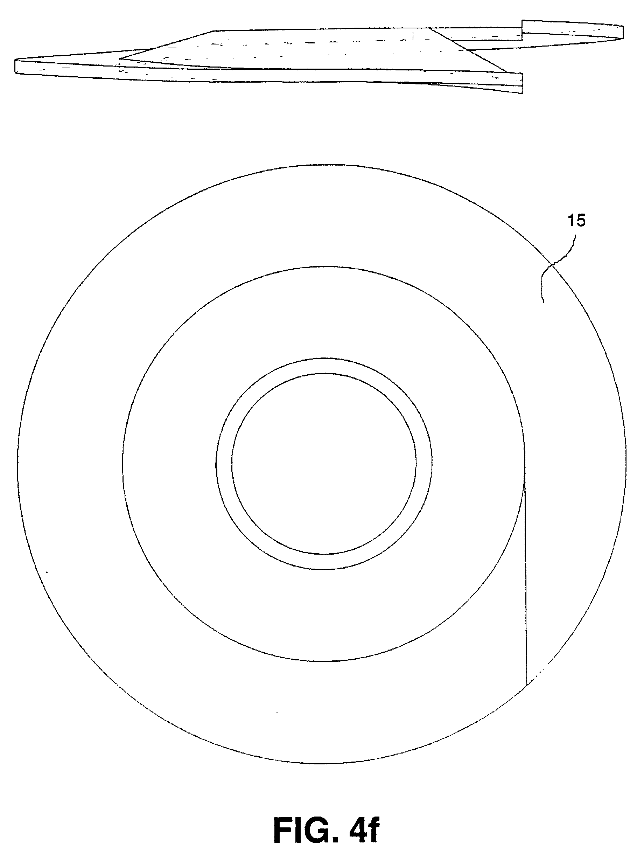

In fact, oxidation reaction of CO into CO₂ really is promoted by the architecture of the combustion chamber 3 and by the presence of particular flow conveyors (liners) particularly shown in figure 4.

In the upper part of the heat exchanger 14 (top part of the combustion chamber 3) is provided a particular aluminium helix 15, in order to protect from the flame direct radiation the thermal upper insulation of the heat exchanger 14, transmitting by conduction heat received from the smokes and from the burner at the last turn of the coil and to realise a housing for the last turn, in such a way to make the spiral - insulating element - bottom coupling during the assembly phase of the heat exchanger 14.

After this first heat exchange phase, essentially by radiation, hot smokes passes through the interstices between the pipe turns, exchanging heat, mainly by convection, with water flowing into the same pipe.

Wide "flat" profile zone of the pipe of the heat exchanger 14 (particular "a" of figure 2) has been studied to maximise the exchange surface, in the passage of the hot smokes from inside to outside of the spiral (1° smokes path).

This phase of the thermal exchange is particularly efficient and provides a remarkable contribution to the exchange of the whole system.

At the end of the flat profile part, smokes, in their path outward the heat exchanger 14, meet a flow conveyor 5, comprised of a sheet providing a projections and holes system, see figure 4, suitable to make the hot smokes lap also the circular part of the spiral wound pipe. Other possible embodiments of the flow conveyor 5 are shown in figures 4a - 4e.

Openings and projections system provided smokes toward the outer end of the spiral, obliging them to flow along the curved profile of the pipe (particular b of figure 2).

Without the flow conveyor 5, smokes would tend not to completely "wound" the end part of the circular profile turn, with consequent lower exchange efficiency.

Therefore, the function of the flow conveyor 5 can be individuated in a remarkable increase of the specific surface efficiency of the heat exchanger 14, forcing hot smokes to lap all the heat exchanger 14 coil, included the curved side of the ovoid pipe, being thus possible to obtain high exchange power with relevant reduced surfaces. Furthermore, flow conveyor 5 shields the outer plating of the heat exchanger 14 from the direct radiation of the flame and, thanks to the following heating, and to the turbulence induced in the discharge gas flow, contributes to the reduction of the CO emissions, said Co being contained in the smokes as CO₂.

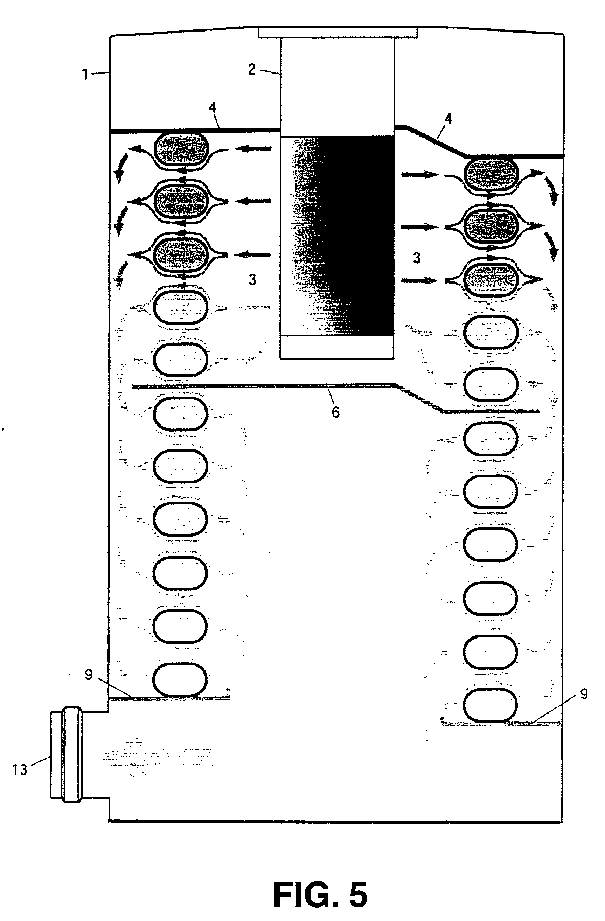

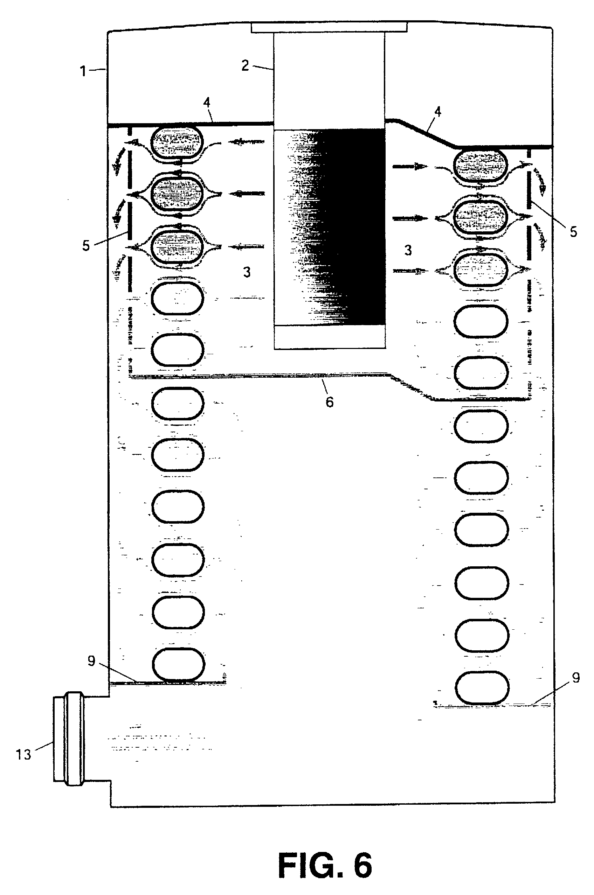

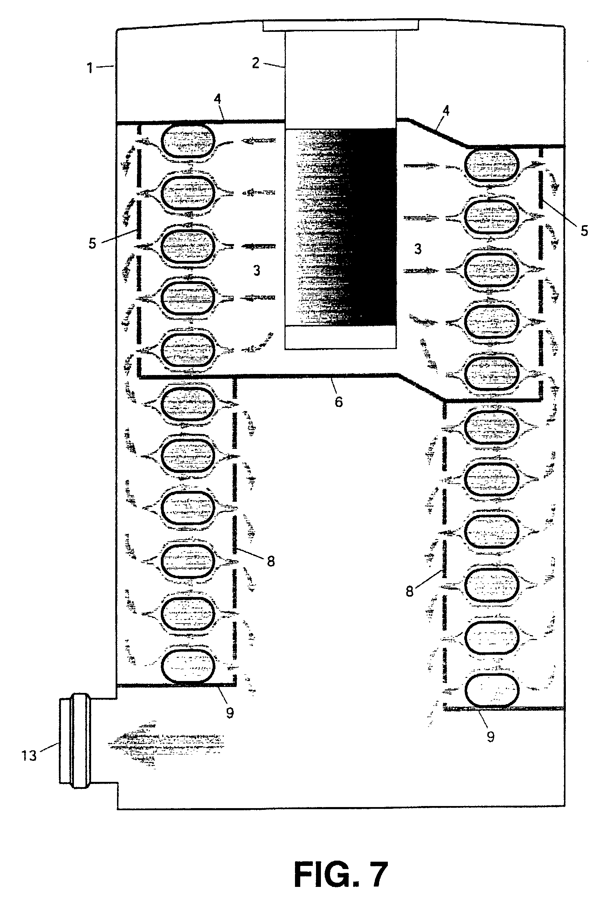

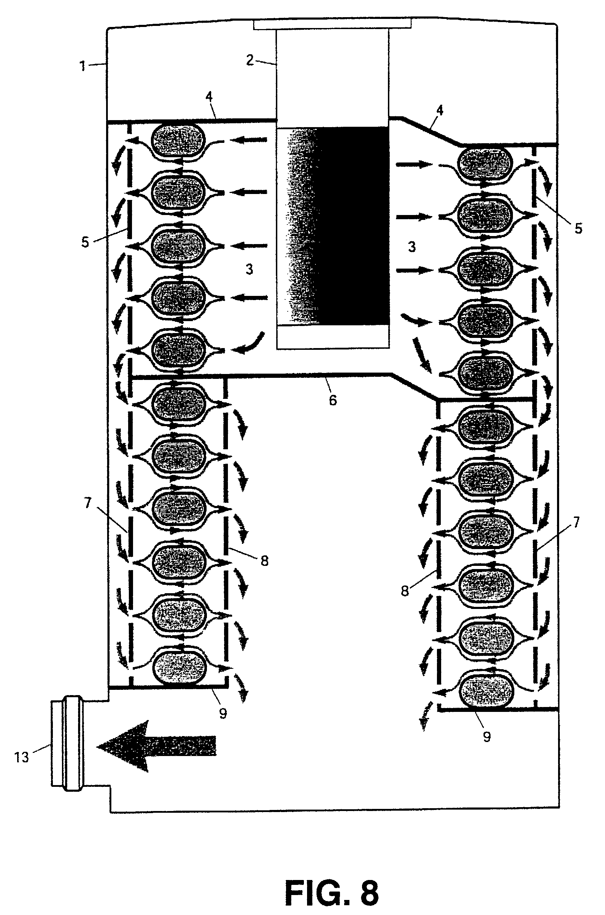

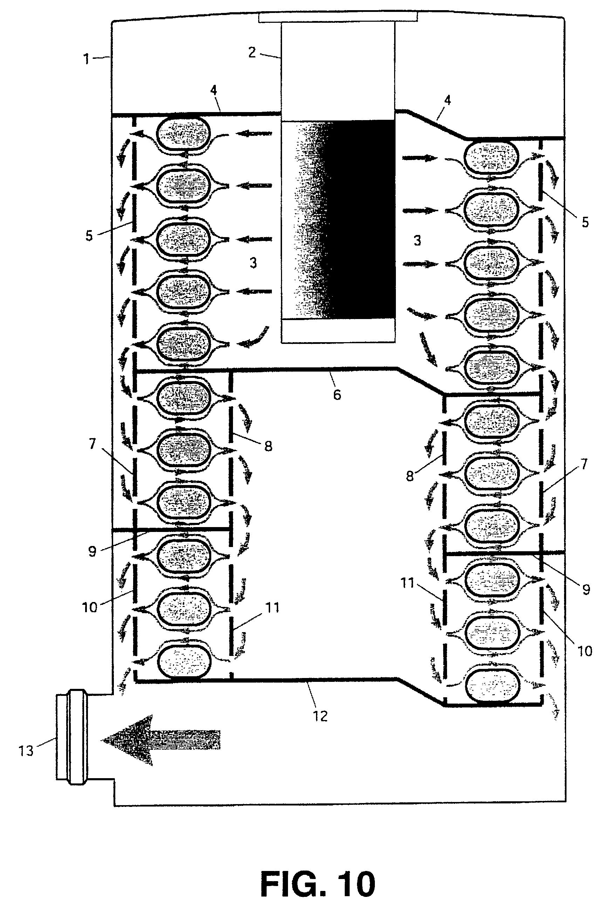

Once out of the conveyor, smokes cover the most outer layer of the heat exchanger 14, adjacent to the plating, until meeting one or more settee, according to the various solutions shown in the various figures 5, 6, 7, 8, 9a, 9b, and 10, obliging them to vary once or more times the path, according to an alternate mode, inside and outside the spiral wound pipe, until realising the second, the third, and possibly the n smoke path.

This solution allows to reach different exchange efficiencies with different load septums on the smoke side.

During the tests carried out on the heat exchanger according to the invention, no high discontinuities zone has been individuated, such as hot spots, smokes or water reflow zones, sharp increase of the outer housing temperature.

Further, the heat exchanger according to the invention has optimum features of corrosion resistance, even in presence of agents that are corrosive for stainless steel, such as chlorides, fluorides and generally speaking alogenate; this mainly for the lack of initiations points for the corrosion along the coil, such as weldings, corrugations, flaps, recesses, sharp profile variations.

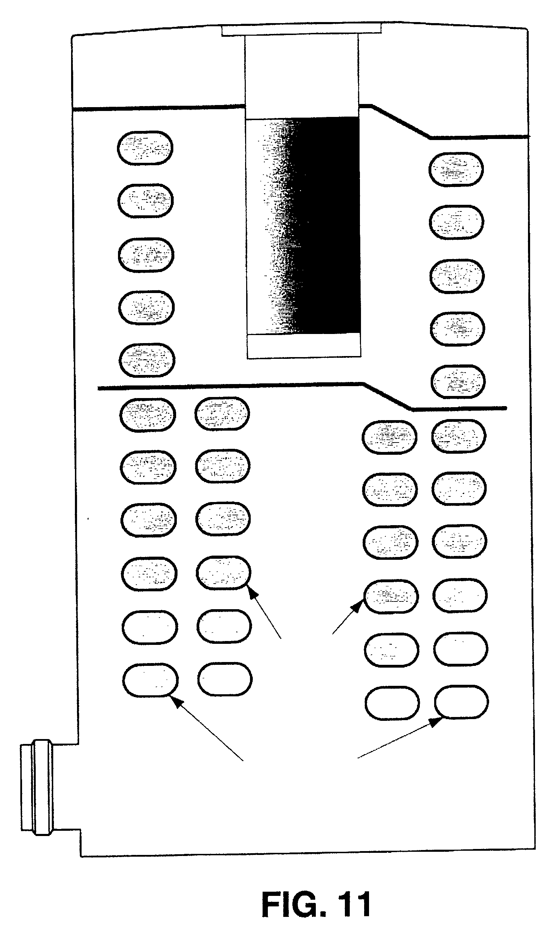

In figure 11 a further embodiment of the heat exchanger according to the invention is shown, providing a second spiral in the lower part of the heat exchanger, serially and concentrically placed with respect to the first one, having a smaller diameter with respect to the first turn.

This spiral has a profile similar to the profile of the main spiral and allows to make further reversals of the smoke path and/or exchange part more efficient with a further increase of the exchange efficiency with respect to the above described solutions.

A spiral pipe, possibly introduced within the main pipe, as shown in figure 4, acts as sanitary heat exchanger of the bi-thermal type, realising "steady state", a water - water exchange, even without circulation of the primary circuit water ("standstill" primary water).

By this solution, the system can act as "sanitary" heat exchanger without the aid of heat exchangers outside the main one, with a remarkable simplification of the system and a remarkable reduction of the manufacturing costs of the exchange system with respect to the known solutions.

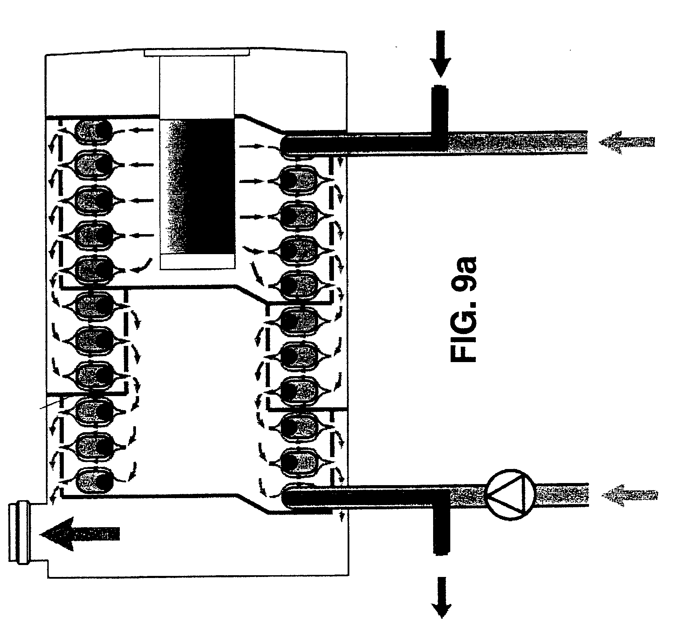

The last solution can be adopted with three main variations; and particularly:
- heat exchange with the water of the primary circuit standstill and circulation only of the water of the secondary water. Then, water of the secondary circuit can be directly thrust by the aqueduct pressure, or by a specific circulating device, with or without storage inertial tank.
- heat exchange with the water of the primary circuit partially circulating with the help of a by-pass and circulation of the secondary circuit water as in the preceding solution (see particularly figure 9b).
- heat exchange with the water of the primary and secondary circuits circulated by two different circulating devices, or by a circulating device plus a switching valve.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. High efficiency spiroidal heat exchanger for heating and/or production of sanitary hot water, particularly suitable for the condensation, **characterised in that** it provides a combustion gas path through the spaces between the turns of the pipe defining the combustion chamber.

2. Spiroidal heat exchanger according to claim 1, **characterised in that** flow conveyors or liners are provided, for the proper operation of the heat exchanger, thus remarkably increasing the specific surface efficiency of the heat exchanger, obliging the hot smokes to lap all the coil of the heat exchanger, included the curved side of the ovoid pipe.

3. Spiroidal heat exchanger according to one of the preceding claims, **characterised in that** they are provided possible different kind of conveyors to obtain high exchange power with quite small surfaces, shielding the outer walls of the heat exchanger from the direct radiation of the flame and contribute, thanks to their heat contribution, and to the turbulence induced into the discharge gas flow, to the reduction of the CO emission from the heat exchanger.

4. Spiroidal heat exchanger according to one of the preceding claims, **characterised in that** said path takes a very flexible architecture providing the passage of the discharge smokes, downward the combustion chamber, from outside to inside the spiral, and vice versa, thus realising systems having one, two, three, etc., smoke paths.

5. Spiroidal heat exchanger according to one of the preceding claims, **characterised in that** it is provided the use of a coil, serially provided with respect to the main coil, and concentrically placed with respect to the same, in order to increase the exchange surface, and thus further increase the efficiency of the system.

6. Spiroidal heat exchanger according to one of the preceding claims, **characterised in that** it is provided a coil within the main coil allowing to have heat exchange with the primary water and standstill water, or heat exchange with the primary water and partially circulating water, or heat exchange with the primary water and fully circulating water.

7. Spiroidal heat exchanger according to one of the preceding claims, **characterised in that** it is provided an aluminium helix provided in the upper part of the heat exchanger.

8. High efficiency spiroidal heat exchanger for heating and/or production of sanitary hot water, particularly suitable for the condensation, according to each one of the preceding claims, substantially as illustrated and described.
